Europäisches Patentamt

European Patent Office

Office européen des brevets

(11) Publication number: **0 269 159**
**A1**

# (12) EUROPEAN PATENT APPLICATION

(21) Application number: 87202120.9

(22) Date of filing: 03.11.87

(51) Int. Cl.⁴: **G11B 33/04**

(30) Priority: 05.11.86 NL 8602794

(43) Date of publication of application:
01.06.88 Bulletin 88/22

(84) Designated Contracting States:
**CH DE ES FR GB IT LI NL**

(71) Applicant: **N.V. Philips' Gloeilampenfabrieken**
**Groenewoudseweg 1**
**NL-5621 BA Eindhoven(NL)**

(72) Inventor: **Doodson, Peter John**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) Package for an optically readable disc.

(57) A package for an optically readable disc (4) comprises a support (1) which at one side carries retaining means (2) which retain the disc in a readily detachable manner, whilst a cover (3) is fitted on one side and in its closed condition covers the disc. In order to ensure an easy removal of the disc, even when it has a comparatively large diameter, the entire cover is detachable from the support and the cover and the support can be re-united by a sliding movement with the aid of means (6-10) which cooperate with each other and over a sliding distance which is smaller or even substantially smaller than half the dimension of the cover measured in the sliding direction.

FIG.2

EP 0 269 159 A1

## "Package for an optically readable disc"

The invention relates to a package for an optically readable disc, comprising an at least generally planar support which on one of its sides carries retaining means for holding the disc on the support in a position parallel to said support and in a manner such as to be readily detachable, and on one side of the support a cover which in a closed condition covers the side of the disc which is remote from the support.

A package of this type is known, for example from European Patent Application 0,086,484 (PHD 82/475), and, in a slightly modified form, it is employed widely for packaging optical audio discs of a type referred to as Compact Discs or CD records. The package consists of a flat plastics case comprising a bottom and a cover which is pivotally connected to one side of the bottom. A flat support for the Compact Disc is mounted in the bottom of the case as a separate plastics part provided with retaining means for the Compact Disc in the form of a plurality of resilient elements arranged in a circle, which elements clamp the Compact Disc at the location of its centre hole. The bottom and the cover of the case are made of a transparent plastics. The case and the support are identical for all Compact Discs, but depending on the music recorded on the Compact Disc the case is provided with a printed inlay which is visible from the outside through the plastics parts of the case. Thus, the outward appearance of the package differs widely for all Compact Discs despite the use of standard parts.

The Compact Disc has a diameter of approximately 12 cm. It has been found that the known package is not suitable for discs of larger diameter. Optical video discs, referred to as Laser Vision discs or LV-discs, have a diameter of 20 or 30 cm. Enlarging the known Compact Disc package to dimensions such that it is suitable for the storage of an LV-disc will lead to substantial problems with respect to the hinge construction by means of which the cover is attached to the bottom. In view of the desired rigidity of the package the wall thicknesses of the cover and the bottom must then be increased to such an extent that the mass of the package becomes undesirably large. Another point is that whereas the CD package enables the bottom to be held in one hand and the cover to be opened with the other hand, after which the Compact Disc is removed from the container with one hand while holding the package in the other hand, this method of opening the package and removing the disc cannot be used in the case of LV discs. The package is so large that in practice it is necessary to place it on a supporting surface before the cover is opened. The LV disc can then be removed from the package thus supported.

It is an object of the invention to provide a package for an optically readable disc which in the same way as the Compact Disc package enables a standard package to be utilized for different discs, but which is suitable for discs larger than the Compact Disc, without the package becoming disproportionately large, and which can also be opened and closed easily by a user without the package being supported on a surface. To this end the invention is characterized in that for removing the disc from the package the entire cover is easily detachable from the support and in that the cover and the support can be attached to each other with a sliding movement and are provided with attachment means which cooperate with each other in an undercut fashion and over a sliding distance smaller than half the dimension of the cover measured in the direction of sliding.

As a result of the inventive steps the new package differs substantially from the known CD package. First of all, the package in accordance with the invention comprises two separate parts: Instead of having to handle an assembly comprising a bottom and a cover of substantially the same size as the bottom pivotally connected thereto, the user only has to handle the cover with one hand and the support with the disc with the other hand. After the cover has been put aside the disc can be removed from the support with the hand which is then free. Moreover, removal of the cover from the package in accordance with the invention is effected in a completely different and also more convenient manner than opening a large pivotal cover. Since the cover and the support of the package in accordance with the invention need only be moved over a sliding distance which is smaller, if desired substantially smaller, than half the dimension of the cover measured in the direction of sliding, only a relatively small sliding movement is necessary to enable the cover to be removed from the support. In the case of an LV disc having a diameter of 20 cm the sliding distance may be, for example, only 10 mm. To remove the cover only a small sliding movement of 10 mm is to be made, after which the cover can be removed from the support in any desired manner, i.e. by a pivotal or translational movement or a combination of these two movements, and can be put aside. Another important advantage of the invention is that the cover of the package in accordance with the invention can be made substantially thinner than the cover of a scaled-up CD package. This is because the cover is a separate part and need not have the same constructional features of a part which is pivotally connected to the bottom at one side. A major problem with such a part is that the pivotal cover must have a specific resistance against torsional deformation about an axis perpendicular to the hinge axis and disposed in the plane of the cover. Such deformations occur when the cover is opened by pulling on a corner of the cover. The cover of the package in accordance with the invention is not subjected to torsional deformation and therefore need not be designed to resist such a deformation.

To facilitate handling of the package in accordance with the invention an embodiment is of interest which is characterized in that the support is provided with a grip which is not covered by the cover in the closed condition thereof and which is situated at one of the edges of the support to enable the support to be held with one hand while the cover or the disc is fitted or removed with the other hand. In this way handling of the package is greatly simplified, whilst the presence of the grip also has the advantage that it can be held firmly between the thumb and fingers of one hand, thus providing an optimum protection against the support and the disc falling while the package is being handled by the user.

Using a further embodiment of the invention has the advantage that the cover can also be held firmly between the thumb and fingers of one hand near an edge of the cover. This embodiment is characterized in that the cover comprises: a substantially planar cover portion which, when fitted, covers a major part of the support and completely covers a disc disposed on the support, a rear wall which extends perpendicularly to the cover portion, and a bottom wall which is connected to the rear wall and extends parallel to the cover portion, the dimension of the bottom wall measured in a direction perpendicular to the rear wall being smaller than that of the cover portion. The presence of the rear wall and the bottom wall have the additional advantage that they contribute to the rigidity of the cover. Preferably, this embodiment is constructed in such a way that the bottom wall of the cover is connected to the cover portion by side walls, so that the bottom wall, the side walls, the rear wall and the part of the cover portion at this location together constitute a rugged sleeve-like portion of the cover which can be held firmly in one hand. Thus, at the side where it can be gripped, the cover has a rigid box-like construction without necessitating larger material thicknesses.

Another embodiment of the invention is characterized in that the grip of the support is situated at a first side of the support which extends transversely of the sliding direction of the cover, in that a second side of the support opposite the first side engages in the sleeve-like portion of the cover when the cover is fitted, in that measured in a direction transverse to the sliding direction the width of the cover is smaller than that of the support, in that the support comprises a bottom and, on opposite sides of the bottom, side walls which extend perpendicularly to said bottom and parallel to the sliding direction, in that the side walls of the support cover the side edges of the cover portion of a fitted cover and the side walls of the sleeve-like portion, in that the bottom of the support has slots which open out of the second side of the support, in which slots the side walls of the sleeve-like portion of the fitted cover engage, and in that the support and the fitted cover together form a unit having at least generally the form of an imperforate flat rectangular case. This embodiment has some significant advantages. The package can have a clean-cut, imperforate and elegant appearance. The cover can be thin because at its side walls it is protected by portions of the support. At its sleeve-like portion the cover is locked to the support by the engaging portion of the support, so that further means for attaching the cover to the support in the sliding direction are needed only near the opposite end of the cover.

Suitably, an embodiment is used which is characterized in that the portions of the side walls of the support which directly adjoin said open slots are constructed as resilient strips each having a free end at the second side of the support and a second end which is rigidly connected to the support, and in that the resilient strips and those side walls of the sleeve-like portion of the cover which adjoin said strips when the cover is closed are provided with gripping means which cooperate with each other under the influence of the resilience of the resilient strips to attach the closed cover to the support. In this way the cover is effectively locked to the support in a simple manner, utilising the resilient properties of the material which is used.

The presence of the bottom wall of the cover enables a further embodiment of the invention to be realized, which is characterized in that near the second side of the support the bottom has an opening which extends beneath a part of an inserted disc, and in that the opening is covered by the bottom wall of the cover when the cover is fitted. The presence of an opening in the support beneath the disc may be important for the removal of the disc from the support after removal of the cover. If in the same way as is customary in the CD package the disc is clamped on the support at the location of its centre hole, it may be advantageous if pressure can be applied to the disc through an opening in the support near the periphery of the disc to release the disc from the central retaining means. Compact Discs have dimensions such that most people can hold the disc between the thumb and fingers of one hand at diametrically opposite points on the periphery of the disc to remove the disc from the central retaining means. This is not possible with 20-cm discs, let alone 30-cm discs. When the disc is centrally retained, the package in accordance with the invention nevertheless enables the disc to be removed from the support after the cover has been put aside without the necessity of supporting the disc support on a surface of some kind.

Preferably, the invention is characterized in that the package comprises an inlay, which may be printed, comprising a cover portion which covers at least a part of the cover portion of the cover at the side of the cover portion which is to face the disc, a back portion and a bottom portion which are situated in the sleeve-like portion of the cover to cover at least a part of the rear wall and of the bottom wall of the cover respectively, and in that on opposite sides the cover is provided with inlay holders which are spaced from the cover portion and extend parallel thereto so as to receive the inlay. This embodiment enables the package to be individualized, i.e. the appearance of the container to be adapted to the video program of the disc in the package.

For an effective attachment of the cover to the support a further embodiment is of interest which is characterized in that at the second side of the support the means for attaching the cover and the support to each other comprise the sleeve-like portion of the cover and the part of the bottom of the support which engages in said sleeve-like portion and nearer the first side of the support the attachment means comprise closing portions which are arranged on the cover and which are engageable in slots in the support. In this respect it is advantageous to use an embodiment which is characterized in that said closing portions of the cover comprise the inlay holders. Thus, in the last-mentioned embodiment the inlay holders serve both for holding the inlay and for locking the cover to the support, so that the inlay holders have a double function.

The next embodiment is characterized in that the support is provided with retaining means which are engageable in the centre hole, and in that the support comprises spacer means which during a sliding movement of the cover over the support towards the first side cooperate with the closing portions of the cover to keep the cover at a distance from the support as long as the inlay is not yet disposed over the retaining means. This construction ensures that if the disc is retained by retaining means in its centre hole, in the same way as is customary for Compact Discs, the inlay cannot abut against the retaining means which project from the centre hole when the cover is slid into position. Damage to the inlay and consequent malfunctioning of the closing means of the package is thus prevented.

One of the many embodiments which are possible within the scope of the invention will now be described in more detail, by way of example only, with reference to the accompanying drawings, in which:

Figure 1 is a perspective view showing a package containing a disc and being held by a user,

Figure 2 shows the package of Figure 1 in the opened condition, the support with a disc on it being held by the user in one hand and the cover, removed from said support, being held in the other hand,

Figure 3 is a perspective view of the package of Figure 1 showing the cover being put aside to enable the disc, held in one hand, to be placed on the support, held in the other hand,

Figure 4 is a perspective view showing the support and the cover in a position relative to one another in which the cover can be slid onto the support,

Figure 5 is an exploded perspective view of the package shown in the preceding figures and comprising three parts: support, cover and inlay,

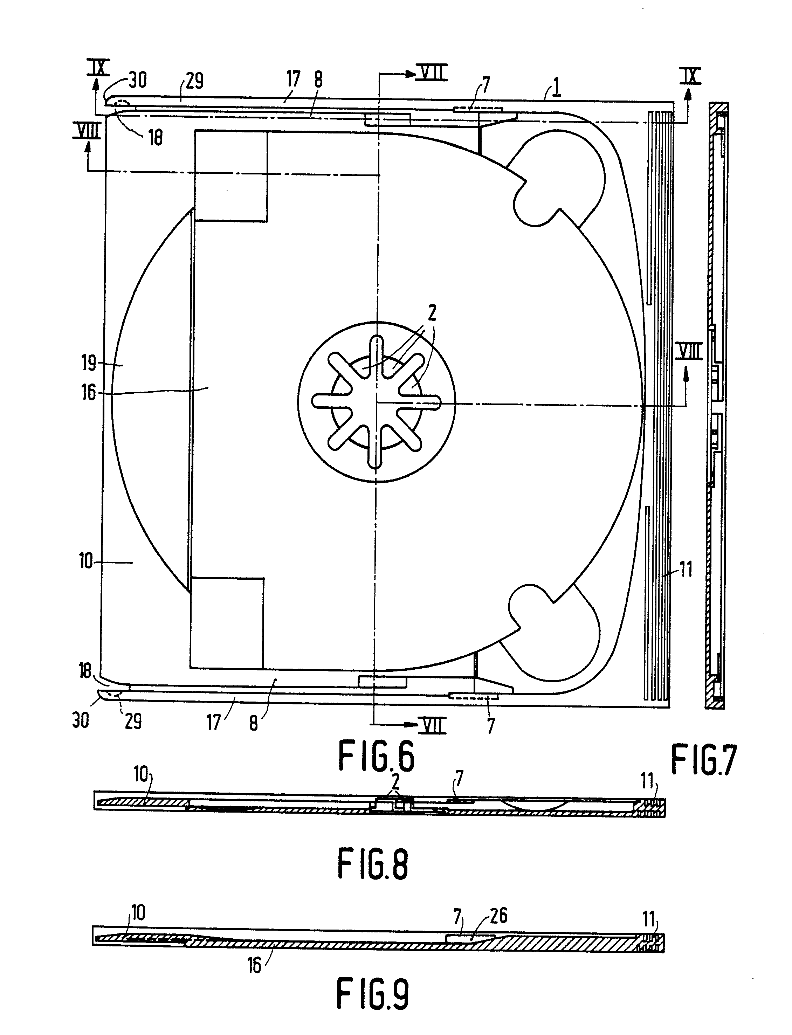

Figure 6 is a plan view of the support of the package shown in the preceding figures,

Figure 7 is a cross-sectional view taken on the line VII-VII in Figure 6,

Figure 8 is a cross-sectional view taken on the line VIII-VIII in Figure 6,

Figure 9 is a cross-sectional view taken on the lines IX-IX in Figure 6,

Figure 10 is an underneath view of the support shown in Figure 6,

Figure 11 is an underneath view of the cover,

Figure 12 is a cross-sectional view taken on the lines XII-XII in Figure 11,

Figure 13 is a plan view of a corner portion of a modification of the package shown in Figure 5, and

Figure 14 is a sectional view taken on the line XIV-XIV in Figure 13.

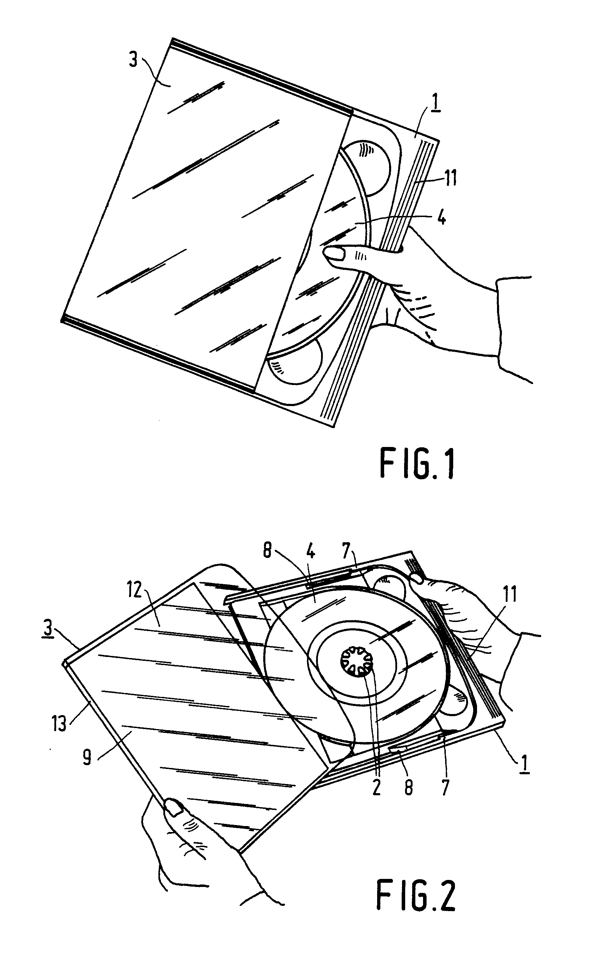

The package shown is intended for an optically readable disc 4, for example a LV disc having a diameter of, for example, 20 or 30 cm. The package comprises an at least generally planar support 1 which on one of its sides is provided with retaining means 2 for retaining the disc in a position parallel to the support and in a manner such as to be readily detachable. In the embodiment shown the retaining means comprise resilient elements similar to those which are used in the known package for Compact Discs. The resilient elements are engageable in the centre hole 5 of the disc and cooperate tightly with the edge portion thereof. The retaining means enable the disc to be retained on the support 1 in a position parallel to and so as to be readily detachable from the support. Further, on one side of the support the package comprises a cover 3 which, in its closed position shown in Figure 1, covers the side of the disc 4 which is remote from the support 1.

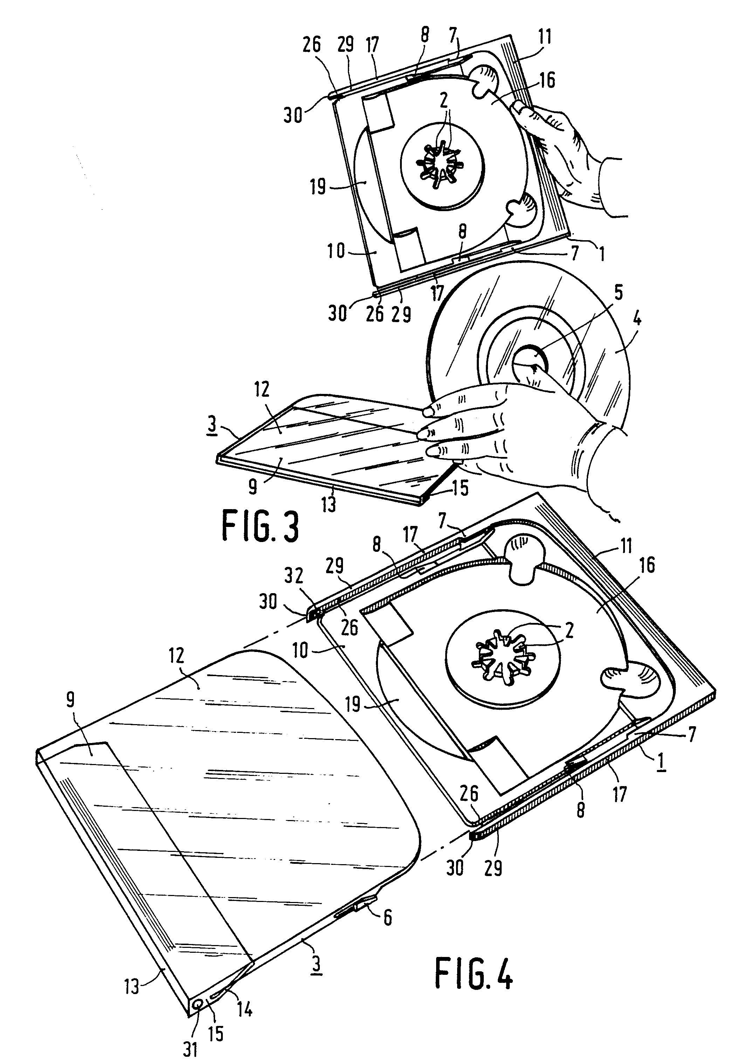

For removing the disc from the package the cover is easily detachable from the support, see Figure 2. The cover and the support are provided with attachment means whereby they can be attached to each other with a sliding movement. In the embodiment shown these means comprise sliding elements 6 on opposite edges of the cover 3 near a first or front side of the cover, i.e., front with respect to the direction in which the cover is slid onto the support 1, and portions 7 of the support which cover sliding grooves 8 at one end thereof and beneath which the elements 6 are engageable. At a second or rear side of the cover 3 the said attachment means comprise a sleeve-like portion 9 to be described hereinafter, which portion is engageable by a second side 10 of the support, to be described hereinafter. The attachment means 6-10 cooperate with each other over a sliding distance which is substantially equal to the length of the sliding elements 6, i.e.only a fraction of the dimension of the cover 3 measured in the direction of the sliding movement. Thus, the cover 3 need only be movable over a small distance to enable it to be readily removed from the support (see Figure 2) and subsequently be put aside for removing or inserting the disc, see Figure 3.

At one edge the support comprises a grip 11 which is not covered by the cover in order to enable the support to be held with one hand (see Figures 2 and 3) while the cover or the disc is fitted or removed with the other hand.

The cover 3 comprises a substantially planar cover portion 12 which in the fitted condition (Figure 1) covers a major part of the support and fully covers a disc placed on the support. The cover further comprises a rear wall 13 perpendicular to the cover portion. A bottom wall 14 is connected to this rear wall and extends parallel to the cover portion 12, the dimension of the bottom wall 14 measured perpendicularly to the rear wall being substantially smaller than that of the cover portion. The bottom wall 14 is connected to the cover portion 12 by side walls 15, so that the bottom wall 14, the side walls 15, the rear wall 13 and the part of the cover portion 12 at this location together constitute the afore-mentioned sleeve-like portion 9 of the cover.

The grip 11 of the support is situated at a first side of the support which extends transversely of the direction of sliding of the cover. Opposite this first side is the afore-mentioned second side 10 of the support which engages in the sleeve-like portion 9 of the cover 3 when this is fitted. The width of the cover 3 measured transversely of the sliding direction, is smaller than that of the support 1. The support comprises a bottom 16 and, on opposite sides thereof, side walls 17 which extend perpendicularly to the bottom and parallel to the sliding direction. When the cover 3 is fitted the side walls 17 cover the side edges of the cover portion 12 of the cover and the side walls 15 of the sleeve-like portion 9 of the cover. The bottom 16 of the support has slots 18 which open out of the second side 10 of the support and which are engageable by the side walls 15 of the sleeve-like portion 9 of the fitted cover. The support 1 and the fitted cover 3 together constitute a unit whose form resembles that of an imperforate flat rectangular case, see in particular Figure 1.

Near the second side 10 of the support 1 the bottom 16 of the support has an opening 19 which extends beneath part of an inserted disc. When the cover is fitted this opening is covered completely by the bottom wall 14 of the cover, see Figure 2.

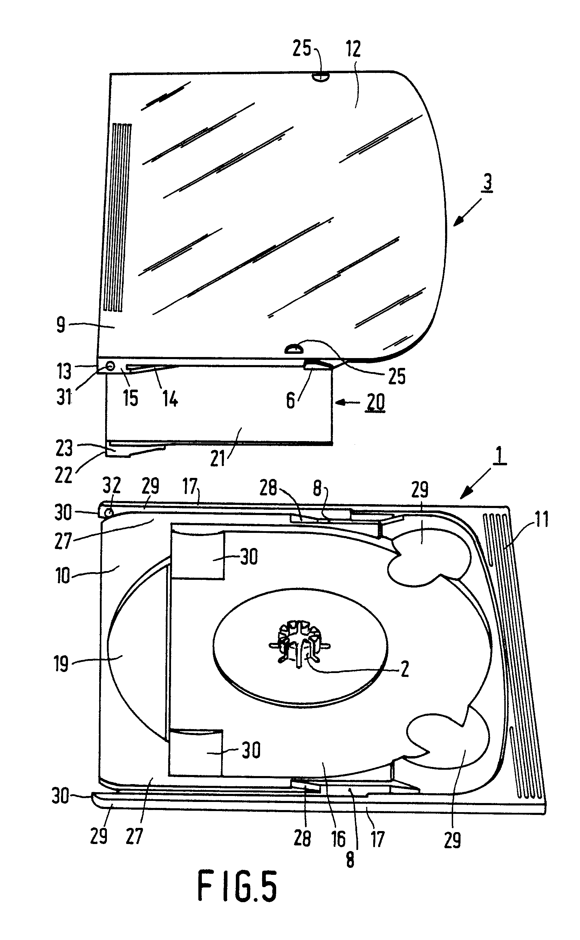

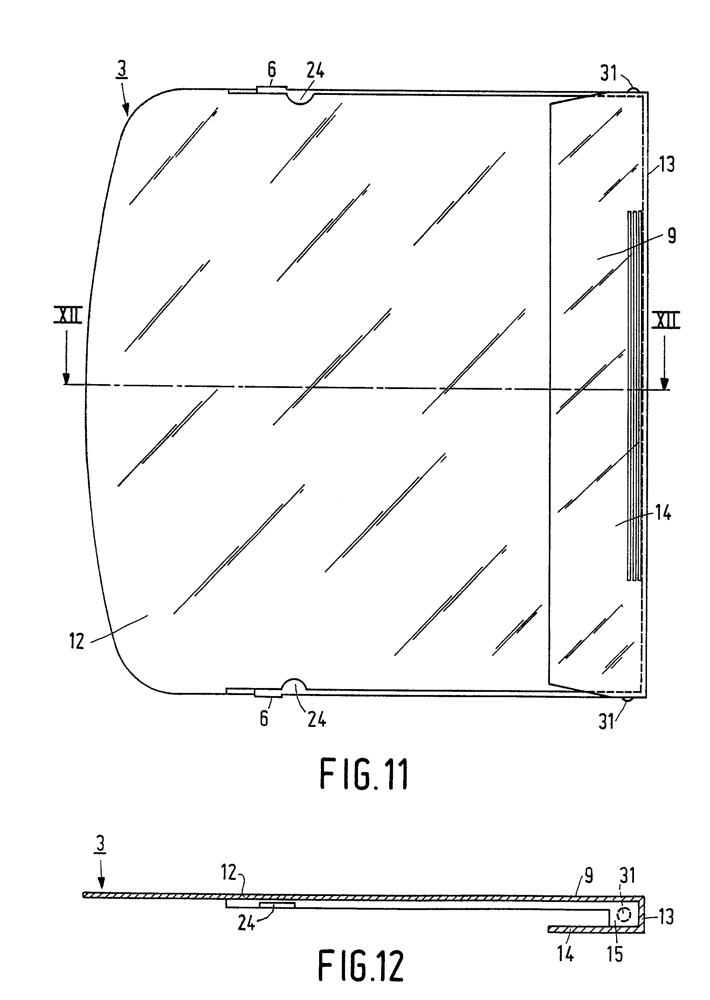

The package may be provided with an inlay 20, which may be printed and which is made of, for example, paper or cardboard. The inlay comprises a cover portion 21 which covers at least a part of the cover portion 12 of the cover 3 at the side of the cover portion which is to face the disc 4. The inlay further comprises a back portion 22 and a bottom portion 23 situated in the sleeve-like portion 9 of the cover to cover at least a part of the rear wall 13 and of the bottom wall 14 respectivele of the cover. As is shown in Figure 5, the cover portion 21 may comprise for example a double-up portion enabling a printed text and/or picture to be viewed both at the outer side and at the inner side of the cover. On opposite sides the cover is provided with inlay holders 24 which are spaced from and extend parallel to the cover portion 12, so as to receive the inlay 20, see in particular Figures 11 and 12. The cover 3 may be injection-moulded from (transparent) plastics, in which case it may be necessary to provide recesses 25 in the cover portion 12 for the passage of pins of an injection-moulding die for moulding the inlay holders 24. The inlay holders should engage around the edges of the inlay 20. The sleeve-like portion 9 and the inlay holders 24 enable the inlay 20 to be retained in an effective manner in the cover.

At the second side 10 of the support 1 the means for attaching the support 1 and the cover 3 to each other comprise the sleeve-like portion 9 of the cover and the part 10 of the bottom 16 of the support that engages in this portion. Nearer the first side of the support 1 these means comprise closing portions in the form of said sliding elements 6 of the cover, which are engageable in the slots 26 formed in the support underneath the portions 7 of the support.

The parts of the side walls (17) of the support which directly adjoin the open slots (18) are constructed as resilient strips (29) each having a free end (30) at the second side (10) of the support. At their other ends they are rigidly connected to the support. The strips have recesses 32 which are adapted to receive the elements 31 on the side walls 15 of the sleeve-like portion 9 of the cover. Thus, the elements 31 and the recesses 32 constitute gripping means which retain the cover in the closed condition. This effectively prevents a fitted cover from becoming inadvertently detached from the support.

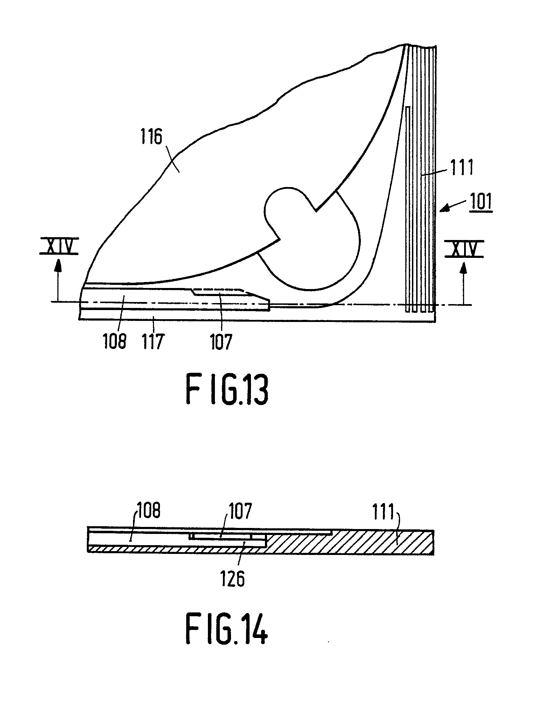

Instead of the sliding elements 6 the inlay holders 24 may be used as closing portions of the cover, see Figures 13 and 14. These Figures show only the modification to the support which is necessary in order to obtain this embodiment. The support 101 now comprises a portion 107 which projects in line with a sliding groove 108 and a slot 126. In the sliding groove 108 the inlay holders 24 engage underneath the portion 107 and are thus engageable in the grooves 126.

In the case of a disc which, as is shown in the drawing, has a centre hole 5 and which is attached to the support 1 by retaining means 2 which are engageable in the centre hole, it is important in order to facilitate fitting of the cover on the support that the support comprises spacer means 27 which during the sliding movement of the cover over the support towards the first side where the grip 11 is situated cooperate with the closing portions 6 to hold the cover at a distance from the support as long as the inlay 20 is not yet situated over the retaining means 2. In the present embodiment these spacer means comprise raised portions situated at the entry ends of the sliding grooves 8. The transitions from the raised portions 27 to the bottoms of the sliding grooves are constituted by inclined surfaces 28 which during the sliding movement lower the cover from the level of the spacer means 27 towards the bottoms of the sliding grooves 8. This ensures that the front edge of the inlay 20 does not abut against the retaining means which project from the centre hole of the disc while the cover is being fitted.

To facilitate removal of the disc the support in the present embodiment is formed with some recesses 29 and 30, which enable the edge of the disc to be gripped at this location.

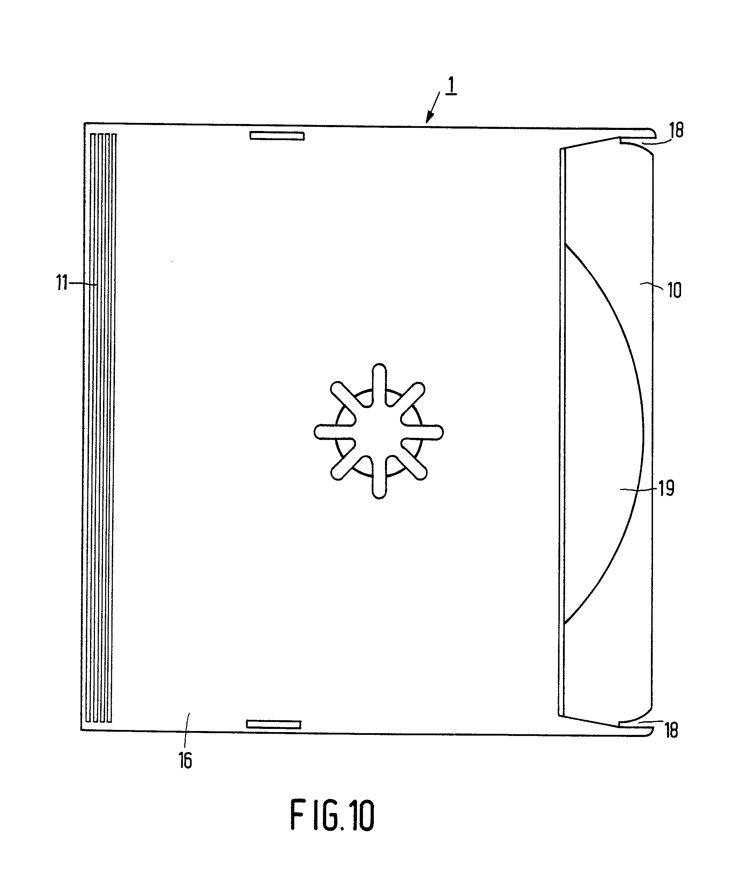

Although the drawing shows one specific embodiment, the invention relates to all the embodiments which are possible within the scope of the appended Claims. For example, the support may comprise a plurality of parts, for example two parts, in the same way as the construction of the known CD packages. If the support is manufactured by means of an injection-moulding process, the back may not always have the smooth appearance shown in Figure 9. However, generally it will be attempted to give the material of the support a uniform wall thickness, so that at the lower side of the support a profile is formed as a result of the profiled upper side. Stiffening ribs may be used to stiffen the support. If the profile and/or the stiffening ribs are visible from the outside of the package, this may be considered to be less aesthetically satisfying by the user, so that it may then be advantageous to conceal the back of the support by a second part.

In the support shown in the drawings the resilient retaining means 2 are arranged around a hole which extends right through the bottom of the support for reasons of injection-moulding technology. This hole is visible from the outside of the package and may be concealed by means which are locally attached to the outer side of the bottom, for example a plastics part which is mounted by ultrasonic welding, a printed adhesive label etc. Another possibility is to provide a closed bottom and to arrange the retaining means on a separate part, connected to the bottom by welding, glueing, or in any other suitable manner.

## Claims

1. A package for an optically readable disc, comprising
-an at least generally planar support (1) which on one of its sides carries retaining means (2) for holding the disc (4) on the support in a position parallel to the support and in a manner such as to be readily detachable, and
-on one side of the support a cover (3) which in a closed condition covers the side of the disc which is remote from the support
characterized in that
-for removing the disc (4) from the package the entire cover (3) is detachable from the support, and
-the cover and the support can be attached to each other with a sliding movement and are provided with attachment means (6-10) which cooperate with each other and over a sliding distance smaller than half the dimension of the cover measured in the direction of sliding.

2. A package as claimed in Claim 1, characterized in that the support is provided with a grip (11) which is not covered by the cover in the closed condition thereof and which is situated at one of the edges of the support to enable the support (1) to be held with one hand while the cover (3) or the disc (4) is fitted or removed with the other hand.

3. A package as claimed in Claim 1, characterized in that the cover (3) comprises:

-a substantially planar cover portion (12) which, when fitted, covers a major part of the support (1) and completely covers a disc disposed on the support,

-a rear wall (13) which extends perpendicularly to the cover portion (12), and

-a bottom wall (14) which is connected to the rear wall (13) and extends parallel to the cover portion (12), the dimension of the bottom wall measured in a direction perpendicular to the rear wall being smaller than that of the cover portion.

4. A package as claimed in Claim 3, characterized in that the bottom wall (14) of the cover is connected to the cover portion (12) by side walls (15), so that the bottom wall (14), the side walls (15), the rear wall (13) and the part of the cover portion (12) at this location together constitute a sleeve-like portion (9) of the cover.

5. A package as claimed in Claims 2-4, characterized in that

-the grip (11) of the support is situated at a first side of the support (1 ) which extends transversely of the sliding direction of the cover,

-a second side (10) of the support opposite the first side engages in the sleeve-like portion (9) of the cover (3) when the cover is fitted,

-measured in a direction transverse to the sliding direction the width of the cover (3) is smaller than that of the support (1),

-the support comprises a bottom (16) and, on opposite sides of the bottom, side walls (17) which extend perpendicularly to said bottom and parallel to the sliding direction,

-the side walls (17) of the support cover the side edges of the cover portion (12) of a fitted cover (3 ) and the side walls (15) of the sleeve-like portion (9),

-the bottom (16) of the support has slots (18) which open out of the second side of the support, in which slots the side walls (15) of the sleeve-like portion (9) of the fitted cover (3) engage, and

-the support (1) and the fitted cover (3) together form a unit having at least generally the form of an imperforate flat rectangular case.

6. A package as claimed in Claim 5, characterized in that

-the portions of the side walls (17) of the support (1) which directly adjoin said open slots (18) are constructed as resilient strips (29) each having a free end (30) at the second side (10) of the support and a second end which is rigidly connected to the support, and

-the resilient strips and those side walls (15) of the sleeve-like portion (9) of the cover which adjoin said strips when the cover (3) is closed are provided with gripping means (31, 32) which cooperate with each other under the influence of the resilience of the resilient strips to attach the closed cover to the support.

7. A package as claimed in Claim 5, characterized in that

-near the second side (10) of the support (1) the bottom (16) has an opening which extends beneath a part of an inserted disc and

-the opening (19) is covered by the bottom wall (14) of the cover (3) when the cover is fitted.

8. A package as claimed in Claim 5, characterized in that

-the package comprises an inlay (20), which may be printed, comprising a cover portion (21) which covers at least a part of the cover portion (12) of the cover (3) at the side of the cover portion which is to face the disc (4), a back portion (22) and a bottom portion (23) which are situated in the sleeve-like portion of the cover (3 ) to cover at least a part of the rear wall (13) and of the bottom wall (14) of the cover respectively, and

-on opposite sides the cover is provided with inlay holders (24) which are spaced from the cover portion (12) and extend parallel thereto so as to receive the inlay (20).

9. A package as claimed in Claim 5, characterized in that at the second side of the support the means for attaching the support (1) and the cover (3) to each other comprise the sleeve-like portion (9) of the cover and the part (10) of the bottom (16) of the support which engages in said sleeve-like portion and nearer the first side of the support the attachment means comprise closing portions (6) which are arranged on the cover and which are engageable in slots (26) in the support.

10. A package as claimed in Claims 8 and 9, characterized in that said closing portions of the cover comprise the inlay holders (24).

11. A package as claimed in Claim 8, for a disc having a centre hole (5), characterized in that

-the support (1) is provided with retaining means (2) which are engageable in the centre hole, and

-the support comprises spacer means (27) which during a sliding movement of the cover over the support towards the first side cooperate with the closing portions (6) of the cover to keep the cover at a distance from the support as long as the inlay (20) is not yet disposed over the retaining means (2).

FIG.1

FIG.2

FIG. 3

FIG. 4

FIG.5

0 269 159

FIG.6

FIG.7

FIG.8

FIG.9

4-VII-PHN 11932

FIG. 10

5 -VII- PHN 11932

FIG.11

FIG.12

116

111

101

XIV                 XIV

108  117        107

# FIG.13

108        107              111

126

# FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | EP-A-0 086 484 (POLYGRAM) * Page 11, lines 1-32; claims; figures * | 1,5,7,8,11 | G 11 B 33/04 |
| A | US-A-3 942 630 (O. PHILLIPS) * Abstract; column 2, line 43 - column 3, line 18; figures * | 1,5,9 | |
| A | FR-A-2 474 461 (KOEHL) * Page 1, line 13 - page 2, line 8; figures * | 1,2,5 | |
| A | EP-A-0 159 860 (CBS SONY RECORDS) * Abstract; page 1, line 5 - page 2, line 23; page 7, lines 10-19; figures * | 1,2,8 | |
| A | DE-A-2 312 400 (TED BILDPLATTEN) * Claims; figures * | 1,5 | |
| A | US-A-2 848 106 (F.H. RICE) * Claims; figures * | 1,2,4,5 | |
| A | DE-A-3 425 579 (POLYGRAM) | | |
| A | DE-A-3 027 804 (HOECHST) | | |
| A | US-A-3 004 659 (D. USHER) | | |

TECHNICAL FIELDS SEARCHED (Int. Cl.4)

G 11 B
B 65 D

The present search report has been drawn up for all claims

| Place of search | Date of completion of the search | Examiner |
|---|---|---|
| THE HAGUE | 09-02-1988 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)